# EUROPEAN PATENT APPLICATION

(11) **EP 4 130 854 A1**
(43) Date of publication of application: **08.02.2023**
(21) Application number: 22186247.7
(22) Date of filing: 21.07.2022
(51) Int. Cl.: G02C 5/20

(54) **SPECTACLE FRAME WITH ADJUSTABLE TEMPLE BARS AND TEMPLE BARS FOR SUCH A FRAME**

(30) Priority: 06.08.2021 IT 202100021356
(71) Applicant: Mirage S.p.A., 21040 Venegono Inferiore (VA) (IT)
(72) Inventor: MILONE, Matteo, 21040 VENEGONO INFERIORE (IT)
(74) Representative: Faggioni, Carlo Maria

(57) **Abstract**

A spectacle frame is disclosed comprising a frontpiece and a pair of temple bars (1), wherein said temple bars (1) comprise
a temple bar body (1a) provided with a housing pocket (13), and
a terminal extension (1b) provided with a mounting stem (11), said stem (11) being inserted longitudinally adjustable into said housing pocket (13), wherein
a plurality of parallel grooves (11n) is provided on an adjustment side of said temple bar (1), and
a through cut-out (14) is provided on said temple bar body (1a) opposite to said parallel grooves (11n),
and moreover
a leaf-spring member (15) which has a central knee portion (15a) and two lateral wings (15b) which extend on two converging planes, and
a closing cover (16) of said cut-out (14) provided with an inner surface and elastically snap-locked in said cut-out (14), remaining with an outer surface thereof flush with an outer surface of said temple bar body (1a),
said leaf-spring member being enclosed between said inner surface of the cover (16) and said grooves (11n).

## Description

### FIELD OF THE INVENTION

The present invention relates to a spectacle frame with adjustable temple bars, in particular with telescopic temple bars.

### BACKGROUND ART

As is well known to those who wear spectacles, the fixed length of the support temple bars does not always correspond perfectly to the anatomy of the user's head, which makes the fit of the spectacles imperfect and includes some discomfort.

In order to solve this problem, several length-adjustable temples for spectacles have been designed and manufactured, but so far all have drawbacks such as structural complexity and/or complex use, poor functionality and reliability of the adjustment mechanisms and an appearance which excessively impacts the aesthetic line of the temple bar.

For example, document US4946268 discloses a length-adjustable temple bar for spectacles, consisting of several parts. One part of the temple bar has a sleeve-shaped section into which a second part of the length-adjustable temple bar is inserted. This second part of the temple has a series of transverse grooves which engage with a stop member which engages the grooves through a housing window obtained in the first part. The stop member slides longitudinally to the grooves and remains locked in place by an elastic member which snap engages on the outer surface of the first part of the temple bar. With this design, the user must intervene to release and snap-insert the stop member, with handling difficulty and the risk of losing the stop member once it has been removed from its engagement position. Furthermore, the stop member impacts the aesthetics of the temple bar.

CN211454133 discloses a similar adjustment mechanism. In this case, the locking mechanism is inserted inside the first temple bar member and intercepts grooves by moving orthogonally thereto. A very small, coiled spring is included which pushes the locking mechanism towards the grooves. The assembly of this configuration is very complicated, and it is difficult to find a suitable compromise for the spring, which is sufficiently robust but at the same time yieldable to allow adjustment.

CN209674123 discloses another adjustment mechanism which improves the foregoing. In this case, the locking member slides in a window open towards the outside of the temple bar and engages with the grooves of the second component from inside a sliding seat. In this case there is a possibility for the user to act on the locking member, to release the engagement and change the adjustment. However, there are many small components which make the manufacturing and assembly complex; furthermore, the design of the coil spring involves significant troubles for its small size.

CN105938254 discloses a further adjustable temple bar system with an elastic member, which however is disclosed only at the level of principle, without a concrete and effective embodiment.

DE8915221 and US5133595A disclose another adjustment mechanism of a temple bar for spectacles. An adjustable temple bar is included, provided with a sliding extension with locking recesses which engage with a ball held in position by an outer sliding sleeve. To obtain the adjustment of the temple bar, the sleeve is moved along a fixed portion of the temple bar and an elastic member disengages the ball from the locking recesses. This solution is aesthetically unacceptable due to the presence of the sleeve, which, moreover, can be inadvertently shifted resulting in releasing the engagement of the adjustable temple bar.

US3705761 discloses a similar solution, in which the sliding extension has a series of locking recesses which are engaged by a tooth of an elastic holding member. The holding member is pushed into the locked position by two elastic tabs. To release the extension and adjust the position thereof, in this case a button of the elastic holding member which protrudes transversely from the fixed part of the temple bar must be pushed. Also in this case, the button protruding from the fixed part of the temple bar determines an unpleasant aesthetic appearance and can injure the user's hands.

Consequently, the need is felt to provide length-adjustable temple bars for spectacles, which overcome the drawbacks of the prior art.

### SUMMARY OF THE INVENTION

Such an object is achieved by means of a spectacle frame provided with adjustable temple bars having the essential features described in the main claim appended hereto. Peculiar and advantageous features are disclosed in the dependent claims.

In particular, according to a first aspect of the invention a spectacle frame comprising a frontpiece and a pair of temple bars is disclosed, wherein each of said temple bars comprise
a temple bar body provided with a housing pocket, and
a terminal extension provided with a mounting stem,
said stem being inserted longitudinally adjustable into said housing pocket, wherein
a plurality of parallel grooves is provided on an adjustment side of said housing pocket of the temple bar body, and
a through cut-out is provided on said temple bar body opposite to said parallel grooves,
and it further comprises
a leaf-spring member equipped with a central knee portion and two lateral wings which extend on two converging planes, and
a closing cover of said cut-out provided with an inner surface, and elastically snap locked on that cut-out in a manner that an external surface thereof is flush with an outer surface of said temple bar body,
said leaf-spring member being enclosed between said inner surface of the cover and said grooves.

According to a further aspect of the invention, the depth (being the distance between two parallel planes touching respectively said knee portion and said lateral wings) of said leaf-spring member is greater than the depth available between said inner surface of the cover and a ridge surface between said grooves.

Preferably, the leaf-spring member has a ring-like configuration. In this case, the cover preferably has on said inner surface a protruding plug, which fits into and runs through a central area of said ring-like leaf-spring member; preferably the stem has a through slit into which said protruding plug can fit.

According to another aspect, the invention provides a temple bar for a spectacle frame as above described, comprising
a temple bar body provided with a housing pocket, and
a terminal extension provided with a mounting core stem,
said core stem being inserted longitudinally adjustable into said housing pocket, wherein
a plurality of parallel grooves is provided on an adjustment side of said temple bar, and
a through cut-out is provided on said temple bar body opposite to said parallel grooves,
and it furthermore comprises
a spring-leaf member which has a central knee portion and two lateral wings which extend on two converging planes, and
a closing cover of said cut-out provided with an inner surface, and elastically snap locked on that cut-out in a manner that an external surface thereof is flush with an outer surface of said temple bar body,
said spring-leaf member being enclosed between said inner surface of the cover and said grooves.

### BRIEF DESCRIPTION OF THE DRAWINGS

Further features and advantages of the invention will anyhow be more evident from the following detailed description of a preferred embodiment, given by mere way of non-limiting example and illustrated in the attached drawings, in which:
fig. 1 is a schematic exploded perspective view, partially in transparency, of a portion of a temple bar according to the invention;
fig. 2A is a schematic perspective view, partially in transparency, from the inner side of a temple bar according to the invention;
fig. 2B is a view similar to that of fig. 2B with the extension extracted,
fig. 3A is a perspective schematic view, partially in transparency, from the outer side of a temple bar according to the invention; and
fig. 3B is a view similar to that of fig. 3B with the extension extracted.

### DETAILED DESCRIPTION OF A PREFERRED EMBODIMENT

A temple bar 1 for spectacles is composed in a manner known per se by a temple bar body 1a and a terminal part or extension 1b. In A proximal end part of the temple bar body 1a, a hinge member 2 is provided in a traditional manner, with which the temple bar 1 is hinged to the nose of a spectacle frame (not shown).

The extension 1b consists of a core stem 11 and a resting portion 12, intended to rest on the user's ear. According to the embodiment illustrated in the figures, for example, the stem 11 consists of a shaped metal strip, while the resting portion 12 is formed by an elastomer portion over-moulded on the stem 11.

The core stem 11 is slidably inserted in a housing pocket 13 obtained longitudinally in the temple bar portion 1a. To avoid unpleasant clearance between the temple bar portion 1a and the extension 1b, the core stem 11 is inserted precisely in the pocket 13.

The core stem 11 also has a shaped section with a plurality of parallel recesses or grooves 11n, spaced with constant pitch. The grooves 11n are arranged orthogonal to the longitudinal sliding axis of the core 11 in the pocket 13.

A series of bottom surfaces in the middle of the grooves 11n and a series of ridge surfaces between one groove and the other are thus defined on the core stem 11.

Preferably the grooves 11n are arranged on a side of the core stem 11 facing the inner side of the temple bar 1 (i.e., the side facing the user's head), but it is not excluded that they can also be arranged differently, for example facing the lower side of the temple bar.

The temple bar body 1a also has a through cut-out 14, in correspondence of the housing pocket 13, in a position opposite the grooves 11n.

According to the invention, moreover, a leaf-spring member 15 is inserted in said cut-out 14 and the latter is closed by a closing cover 16 which is in contact with the leaf-spring member 15.

The leaf-spring member 15 consists of an elastic metallic member having a central knee portion 15a and two lateral wings 15b which extend on two converging planes. With this configuration, the central knee portion 15a is intended to couple in the grooves 11n, while the two lateral wings 15b are intended to rest against an inner surface of the cover 16. The depth of the leaf-spring member 15 - i.e., the distance between the plane passing through the ends of the two wings 15b and the parallel plane passing through the end of the central knee portion 15a - is equal to or slightly greater than the depth available between the inner surface of the cover 16 and the bottom surface of the grooves 11n, but certainly greater than the depth available between the inner surface of the cover 16 and the ridge surface between the grooves 11n.

Therefore, when the leaf-spring member 15 is housed within the cut-out 14 while the cover 16 is applied (i.e., snap on the cut-out 14), it remains partially compressed and elastically deformed, which results in a contrasting elastic reaction against the stem 11. This elastic reaction minimal when the knee portion 15a is at the bottom of the grooves - which thus represent stable engagement positions between the stem 11 and the housing pocket 13 - while it is maximum when the knee portion 15a is at the ridge surfaces - which thus represent unstable positions.

The user can thus move the core stem 11 - and thus the extension 1b - in a series of stable positions, overcoming the elastic reaction of the leaf-spring member 15 until passing the unstable positions defined by the ridges between the grooves 11n.

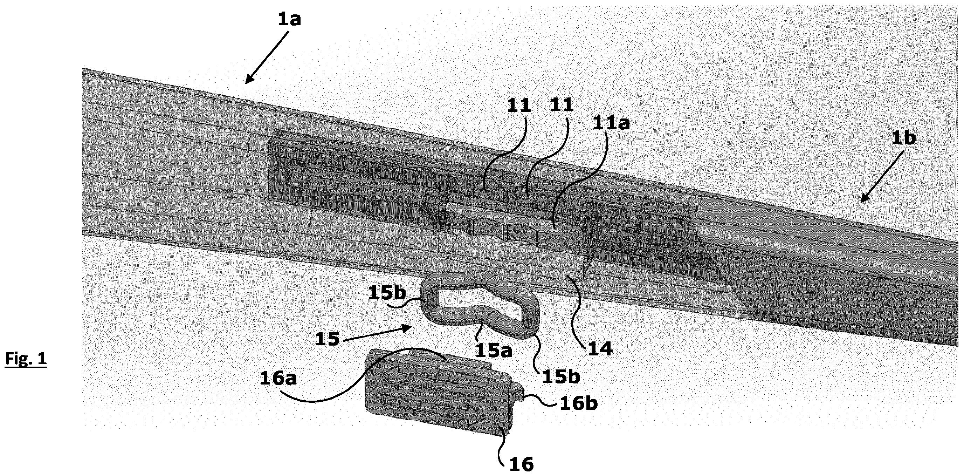

The leaf-spring member 15 preferably has a ring-like configuration, as clearly depicted in fig. 1. In this case, preferably the cover 16 has on its inner surface a protruding plug 16a, which fits into and runs through a central area of the leaf-spring member 15. In this case it is also preferably envisaged that the core stem 11 has a through slit 11a, into which the plug 16a can fit, so as to further guide the movement of the core stem 11 with respect to the temple bar body 1a.

The cover 16 is for example made of plastic or metallic material and has an external flat surface which is, when in position in the cut-out 14, flush the outer surface of the temple bar body 1a. Alternatively, the surface is not completely flat but is provided with indications or surface finish which facilitate insertion and handling.

The cover 16 further has coupling teeth 16b, by means of which it can be firmly engaged in the cut-out 14, for example with a snap-fit pressure action.

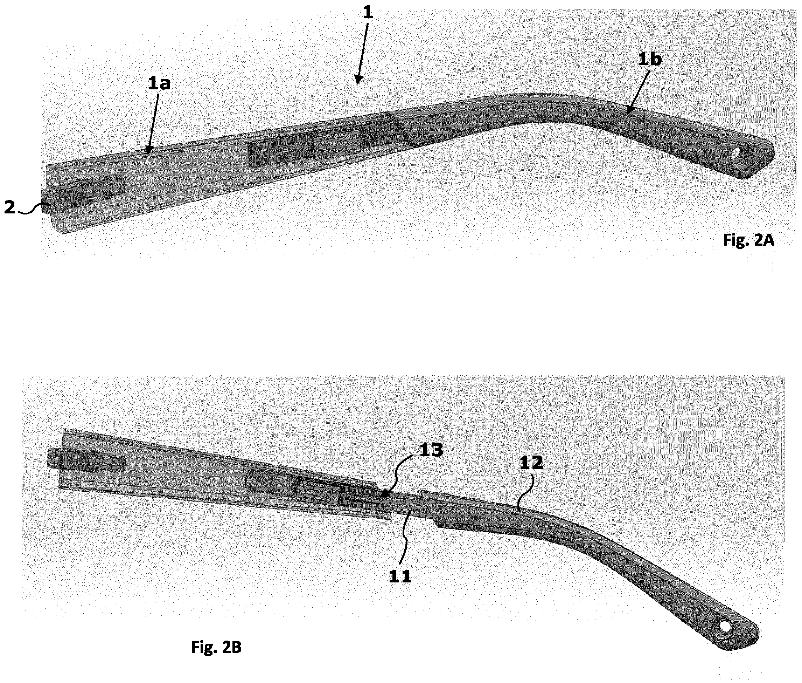

Fig. 2A shows the assembled temple bar, from which it can be deduced that the overall aesthetic aspect is not affected by the presence of the adjustment mechanism, except for the presence of the surface of the cover 16 on the inner side. Fig. 2B shows the temple bar with the extension 1b completely extracted.

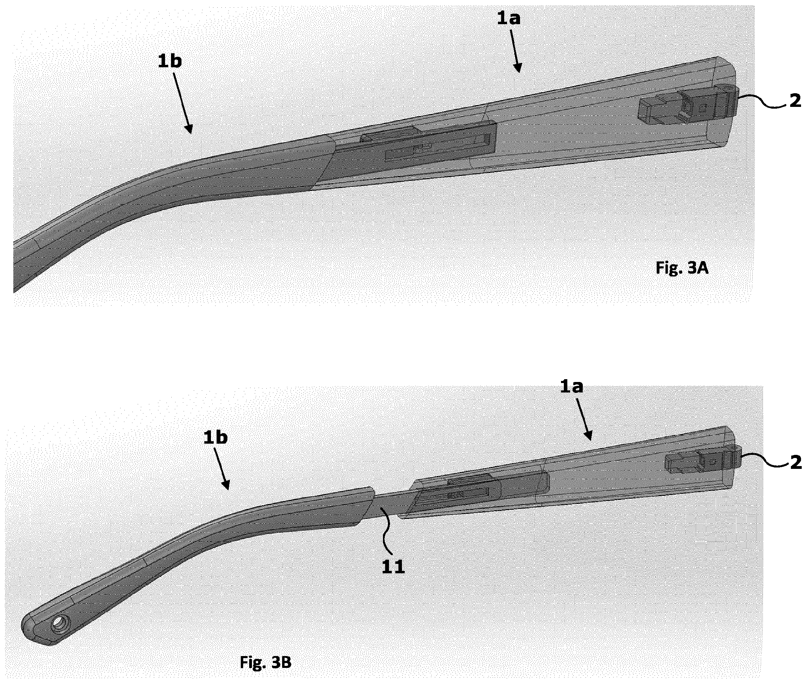

From figs. 3A and 3B - which depict the same configurations as figs. 2A and 2B - it can be inferred that the adjustment mechanism is not almost visible on the outer side of the temple bar 1.

A pair of temple bars according to the invention can be hinged to a frontpiece of spectacles, to define a perfectly adjustable frame for spectacles.

The adjustment of the temple bars allows to adapt the frame to the user's head, ensuring maximum comfort.

The adjustment mechanism, including only a leaf-spring member - which also acts as an engagement member with the stem of the extension - and a relative cover, is extremely simple and inexpensive. The user can obtain the desired adjustment simply by acting with minimal effort on the extension 1b, but he/she is not forced to manipulate small control elements.

The configuration of the leaf-spring member perfectly matches the needs of small space and proportional elastic forces, eliminating any problem of jamming, premature breakage or maintenance.

It is understood that the invention is not to be considered as limited by the particular embodiments described and illustrated, but that different variants are possible, all within the reach of a person skilled in the art, without departing from the scope of the invention itself, which is exclusively defined by the following claims.

For example, although a leaf-spring member has been depicted in which the central knee portion 15a engages with the grooves 11n, an inverted configuration is also possible. For example, it is possible to include an elastic member in which the central knee portion is resting on the inner surface of the cover 16, while the two lateral wings 15b, or their raised portions, are engaged with a pair of grooves 11n suitably spaced apart.

## Claims

1. Spectacle frame comprising a frontpiece and a pair of temple bars (1), wherein said temple bars (1) comprise
a temple bar body (1a) provided with a housing pocket (13), and
a terminal extension (1b) provided with a mounting stem (11),
said stem (11) being inserted longitudinally adjustable into said housing pocket (13), wherein
a plurality of parallel grooves (11n) is provided on an adjustment side of said temple bar (1), and
a through cut-out (14) is provided on said temple bar body (1a) opposite to said parallel grooves (11n),
**characterised in that** it furthermore comprises
a leaf-spring member (15) which has a central knee portion (15a) and two lateral wings (15b) which extend on two converging planes, and
a closing cover (16) of said cut-out (14) provided with an inner surface, and elastically snap locked on that cut-out (14) in a manner that an external surface thereof is flush with an outer surface of said temple bar body (1a),
said leaf-spring member being enclosed between said inner surface of the cover (16) and said grooves (11n).

2. Spectacle frame as in 1, wherein the depth of said leaf-spring member (15) is greater than the depth available between said inner surface of the cover (16) and a ridge surface between said grooves (11n).

3. Spectacle frame as in 1 or 2, wherein said leaf-spring member (15) has a ring-like configuration.

4. Spectacle frame as in 3, wherein said cover (16) has on said inner surface a protruding plug (16a), which fits into and runs through a central area of said ring-like leaf-spring member (15).

5. Spectacle frame as in 3, wherein said stem (11) has a through slit (11a), into which said protruding plug (16a) can fit.

6. Temple bar for a spectacle frame as in any one of the preceding claims, comprising
a temple bar body (1a) provided with a housing pocket (13), and
a terminal extension (1b) provided with a mounting stem (11),
said stem (11) being inserted longitudinally adjustable into said housing pocket (13), wherein
a plurality of parallel grooves (11n) is provided on an adjustment side of said temple bar (1), and
a through cut-out (14) is provided on said temple bar body (1a) opposite to said parallel grooves (11n),
**characterised in that** it furthermore comprises
a spring-leaf member (15) which has a central knee portion (15a) and two lateral wings (15b) which extend on two converging planes, and
a closing cover (16) of said cut-out (14) provided with an inner surface, and elastically snap locked on that cut-out (14) in a manner that an external surface thereof is flush with an outer surface of said temple bar body (1a),
said spring-leaf member being enclosed between said inner surface of the cover (16) and said grooves (11n).
